# EUROPÄISCHE PATENTSCHRIFT

(11) **EP 1 048 635 B1**
(45) Veröffentlichungstag und Bekanntmachung des Hinweises auf die Patenterteilung: **20.10.2010**
(21) Anmeldenummer: 00107674.4
(22) Anmeldetag: 10.04.2000
(51) Int. Cl.: C05F 17/02, C05F 9/02

(54) **Kompostierungsanlage**
Composting installation
Installation de compostage

(30) Priorität: 29.04.1999 CH 79199
(43) Veröffentlichungstag der Anmeldung: 02.11.2000
(73) Patentinhaber: Neuweiler AG, 8280 Kreuzlingen (CH)
(72) Erfinder: Fröhlich, Rolf, 9402 Mörschwil (CH)
(74) Vertreter: Römpler, Aldo

(56) Entgegenhaltungen:
- EP-A- 0 423 514
- EP-A- 0 768 286
- DE-U- 9 401 422
- US-A- 5 204 263
- US-A- 5 434 080

## Beschreibung

Die vorliegende Erfindung betrifft eine Kompostierungsanlage mit einer Mehrzahl von Rottekammern, die je nach oben offen sind oder mindestens eine teilweise nach oben gerichtete Öffnung aufweisen, durch die sie befüllbar sind, wobei Abdeckungsmittel vorgesehen sind, um diese Öffnung abzudecken und mindestens eine Einrichtung zur Bearbeitung des Rottegutes.

Kompostierungsanlagen weisen üblicherweise mindestens einen wannenartigen Silo bzw. eine Rottekammer auf, in der Kompost aus organischen Abfallstoffen hergestellt wird. Um Geruchsimmissionen zu vermeiden, sind derartige Anlagen zumeist in einer Halle angeordnet, die mit einer Abluftfilterung ausgerüstet ist, wobei in der Halle vorzugsweise ein Unterdruck gebildet wird. Die Auslegung der Rottekammer ist im einzelnen sehr unterschiedlich. Sie reicht von einer einfachen Wanne, in welche das Gut oben eingeworfen und mittels einem Mischwerkzeug gemischt und belüftet wird, bis zu Wannen mit einem Förderband, mittels dem das Gut von der einen zur anderen Seite befördert wird. Die bei der Verrottung des zu kompostierenden Gutes entstehen Gase, verursachen indessen nicht nur unangenehme Gerüche, sie sind darüber hinaus auch aggressiv und führen zu Schäden an der Hallenkonstruktion. Insbesondere deren Metallteile müssen darum besonders hochwertig ausgelegt sein. Es versteht sich von selbst, dass dieses schädliche Hallenklima auch zu Schäden und Störungen an den mechanischen und elektrischen Einrichtungen führen, beispielsweise an den Misch- und Belüftungswerkzeugen sowie an den Befüllungs- bzw. Entnahme-Einrichtungen und den damit verbundenen, empfindlichen Antriebs- und Steuerungskomponenten. Um diese Probleme teilweise zu lösen, wurden Kompostierungsanlagen in Form eines Beton-Tunnels von beispielsweise 50 m Länge vorgeschlagen. Hierbei muss aber das Gut vom einen zum anderen Tunnelende geschoben werden, was besonders aufwendige Einrichtungen erforderlich macht, die wiederum ständig den aggressiven Gasen ausgesetzt sind. Das wesentliche Problem ist daher damit nicht nur nicht gelöst, sondern sogar noch verschärft. In derartigen Anlagen ist zudem die Behebung von Betriebsstörungen im mit verrottendem Gut gefüllten Tunnel für das Bedienungspersonal schwierig und in jedem Fall äusserst unangenehm.

In der US-PS 5'204'263 wird eine weitere Kompostierungsanlage vorgeschlagen, bei der eine langgestreckte Rottekammer mit einer der Wärmeisolation dienenden Abdeckung versehen ist. Diese Abdeckung kann rolladenartig geöffnet werden. Deren Zweck liegt nicht darin, die Verrottungsgase in der Rottekammer zu fangen, sondern die für den Verrottungsprozess erforderliche Temperatur besser kontrollieren zu können. Diese rolladenartige Abdeckung wirkt derart mit einer Mischeinrichtung zusammen, dass die Abdeckung durch die Fortbewegung der Mischeinrichtung entlang der langgestreckten Rottekammer geöffnet wird. Während des periodischen Mischens und Belüftens ist die Rottekammer daher offen. Sie wird erst durch Zurückfahren der Mischeinrichtung in ihre Grundposition wieder geschlossen. Dies mag zwar hinsichtlich des Verrottungsprozesses in Kauf genommen werden können. Die vorgehend beschriebenen Nachteile bleiben jedoch ungelöst, da die Rottekammer immer wieder geöffnet wird und die Gase ungehindert entweichen können.

Die vorliegende Erfindung stellt sich daher die Aufgabe, eine Kompostierungsanlage zu schaffen, in welcher die Probleme mit der Abluft, bzw. den schädlichen Gasen und deren Auswirkungen, so weit wie möglich gelöst sind.

Die erfindungsgemässe Kompostierungsanlage entspricht den kennzeichnenden Merkmalen des Patentanspruchs 1. Weitere vorteilhafte Ausbildungen sind in den abhängigen Patentansprüchen angegeben.

Durch die vorgeschlagene, erfindungsgemässe Ausbildung der Kompostierungsanlage werden sowohl die vorgenannten Probleme auf ein Minimum zurückgeführt als auch die Betriebsabläufe vereinfacht und die Betriebskosten verringert.

Nachfolgend werden anhand der Zeichnung zwei bevorzugte Ausführungsbeispiele des Erfindungsgegenstandes näher beschrieben. Hierbei zeigen:

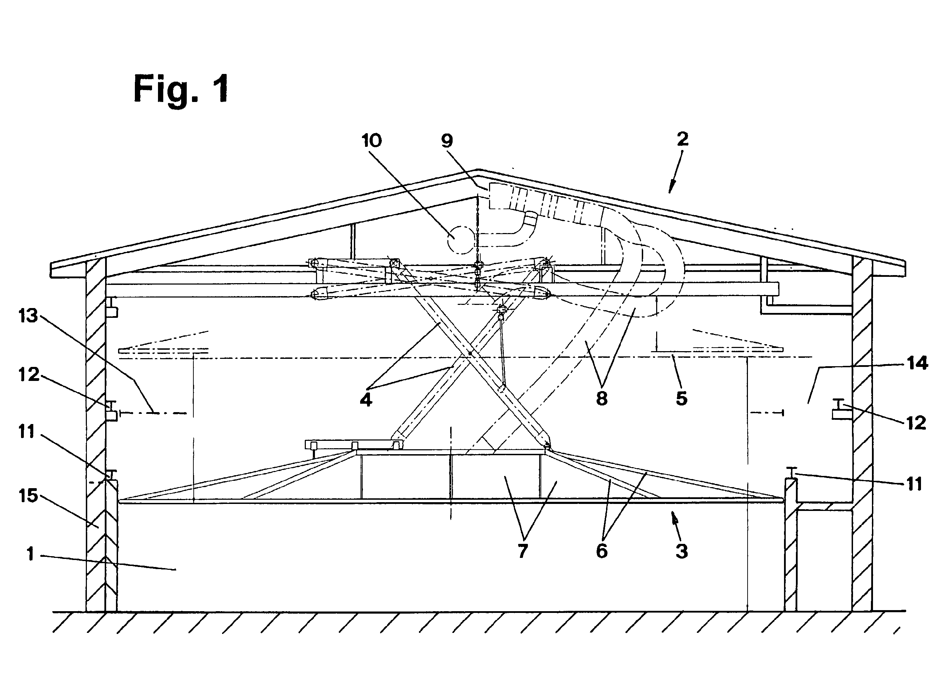

- Fig. 1 und 2: ein erstes Ausführungsbeispiel mit je einem anhebbaren Deckel auf einer Mehrzahl von einzelnen Rottekammern;
- Fig. 3 bis 7: ein zweites Ausführungsbeispiel mit ver- schiebbaren Deckeln sowie damit zusam- menhängende technische Details.

Im ersten Beispiel ist eine Reihe von nebeneinander liegenden Rottekammern 1, wovon hier eine im Schnitt zu sehen ist, in einer Halle 2 untergebracht. Jede einzelne Rottekammer 1 ist mit einem eigenen Deckel 3 versehen. Dieser ist mittels einer Hebevorrichtung 4, hier in Form eines Scherenmechanismus, versehen. Die Hebevorrichtung 4 ist vorzugsweise motorisch angetrieben. Der Deckel 3 ist damit von der dargestellten unteren, geschlossenen Position beliebig bis zur höchsten, gestrichelt angedeuteten Position 5 anhebbar.

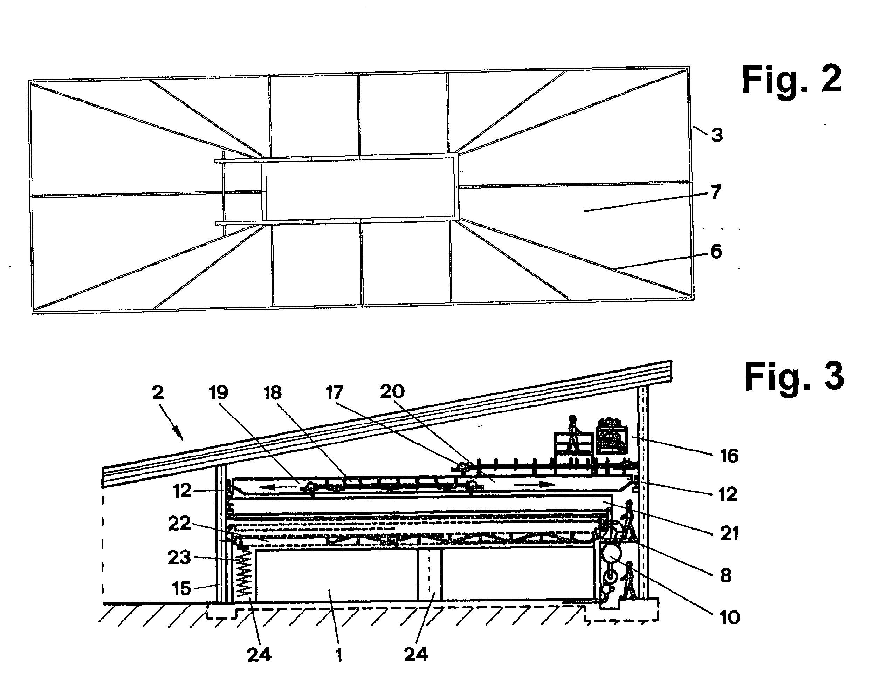

Dieser Deckel 3 besteht aus Gewichtsgründen vorzugsweise aus einer Tragkonstruktion, hier einem Strebengerüst 6, die eine leichte Deckel-Fläche 7 trägt, beispielsweise in Form einer folienartigen Bespannung, z.B. aus Kunststoff. Die Deckel- Fläche 7 kann entweder zwischen den einzelnen Streben angeordnet oder unter das Streben-Gerüst 6 gehängt sein. Eine Draufsicht auf den Deckel 3 geht aus Fig. 2 hervor. Von oben her ist ein Abluftkanal 8 derart zum Deckel 3 geführt, dass die sich innerhalb der Rottekammer 1 bildenden Gase abgeleitet werden können. Dieser Abluftkanal 8 ist vorzugsweise flexibel ausgebildet, so dass er die Hebebewegungen des Deckels 3 nicht behindert. Sowohl die aus der Rottekammer 1 stammende, als auch unter dem Dach 9 gesammelte Abluft, wird über einen Sammelkanal 10 einer Filteranlage zugeführt. Diese Kompostierungsanlage ist mit einer Befüllungs- und einer Mischeinrichtung ausgestattet. Im einzelnen werden diese später, anhand des zweiten Ausführungsbeispiels erläutert. Im wesentlichen bestehen diese jedoch vorzugsweise aus einem Förderbandsystem und aus einer senkrecht stehenden, durch das Rottegut zu bewegenden Mischschnecke. Sowohl die Befüllungs- als auch die Mischeinrichtung sind an je einer fahrbaren Brücke angeordnet, so dass diese von Rottekammer zu Rottekammer fahrbar sind. Für diese beiden Brücken ist in der Halle 2 je ein Schienen-Paar 11 bzw. 12 auf unterschiedlicher Höhe vorgesehen, wobei je eine Schiene 11 bzw. 12 an einer Seite der Reihe von Rottekammern 1 entlang verläuft. Am unteren Schienen-Paar 11 ist die Brücke der Mischeinrichtung und am oberen Schienen-Paar 12 die Brücke der Befüllungseinrichtung geführt. Dies bedeutet, dass zur Befüllung der Deckel 3 der betreffenden Rottekammer 1 bis zur oberen Position 5 angehoben werden muss, während zur Durchführung eines Mischvorgangs ein Anheben bis zur entsprechenden Position 13 genügt. Die Befüllungs- bzw. Mischeinrichtung fahren dabei unter dem angehobenen Deckel durch. Selbst in der angehobenen Position 5 oder 13, sammeln sich die vom Rottegut aufsteigenden Gase zum überwiegenden Teil unter dem Deckel 3 und werden durch den Abluftkanal 8 abgeführt. Die nur zum geringen Teil durch den Spalt 14 seitlich des offenen Deckels 3 entweichende Abluft, wird unter dem Dach 9 gesammelt und abgeleitet Es ist ausserdem zu bemerken, dass bei diesen Vorgängen immer nur der Deckel 3 einer Rottekammer 1 von einer Reihe von beispielsweise 6 - 12 Rottekammern angehoben ist. Der fertige Kompost kann durch eine seitliche Öffnung 15 aus der Rottekammer 1 entnommen werden, wobei für jede Rottekammer 1 eine eigene, vorzugsweise durch ein Tor verschliessbare Öffnung 15 vorgesehen ist. Da aufgrund der Dimensionen der Kompostierungsanlage diese Öffnung 15 ohne weiteres 3.0 - 3.5 m hoch sein kann, ist die Entnahme maschinell möglich, beispielsweise mittels eines Radladers.

In Fig. 3 ist, in einer dem ersten Beispiel entsprechenden Schnittdarstellung, ein zweites Ausführungsbeispiel einer Kompostierungsanlage dargestellt. Auch hier ist eine Reihe von Rottekammern 1 vorgesehen, die in einer Halle 2 untergebracht ist. Wie ersichtlich, ist der Befüllungseinrichtung ein durch die Länge der Halle 2 führendes, zwei- oder mehrteiliges Haupt-Förderband 16 zugeordnet. Das Rottegut wird von diesem an ein im vorliegenden Beispiel zweiteiliges Befüllungs-Förderband 17 bzw. 18 abgegeben, der es in der Rottekammer 1 verteilt abwirft. Hierzu ist das untere der beiden Befüllungs-Förderbänder 18 gegenüber dem oberen Befüllungs-Förderband 17 längsverschieblich gelagert. Das Rottegut fällt zunächst vom oberen 17 auf das untere 18 und an dessen Ende 19 in die Rottekammer 1. Die Befüllungs-Förderbähder 17 bzw. 18 sind an einer entlang von Schienen 12 verfahrbaren Bücke 20 angeordnet. Unter dieser Ebene ist je Rottekammer 1 ein Deckel 21 ebenfalls an Schienen verfahrbar angeordnet. Im Gegensatz zum ersten Ausführungsbeispiel wird der Deckel 21 nicht angehoben, sondern längs der Halle 2 weggefahren. Auf die genaue Ausbildung dieses Deckels 21 wird später eingegangen. Darunter ist, ebenfalls an einer verfahrbaren Brücke 22 eine Mischeinrichtung 23 in Form einer Mischschnecke angeordnet. Dadurch, dass die Mischeinrichtung 23 entlang der Brücke 22 verfahrbar ist und diese wiederum längs der Halle 2, ist die Mischeinrichtung in einer X- und einer Y-Achse bewegbar und kann somit jeden Winkel der Rottekammern 1 erreichen. Die Ausbildung der Mischeinrichtung 23 ist an sich bekannt, z.B. aus dem Schweizer Patent Nr. 672 267 der gleichen Anmelderin. Um die Mischeinrichtung 23 von einer Rottekammer 1 zur nächsten bewegen zu können, ohne dass ein Anheben oder Wegschwenken notwendig wäre, ist in der Rottekammer-Wand mindestens ein Durchlass 24 vorgesehen. Die beim Verrottungsprozess entstehenden Gase werden auch hier jeweils über einen Abluftkanal 8 und einem Sammelkanal 10 einer Filteranlage zugeführt.

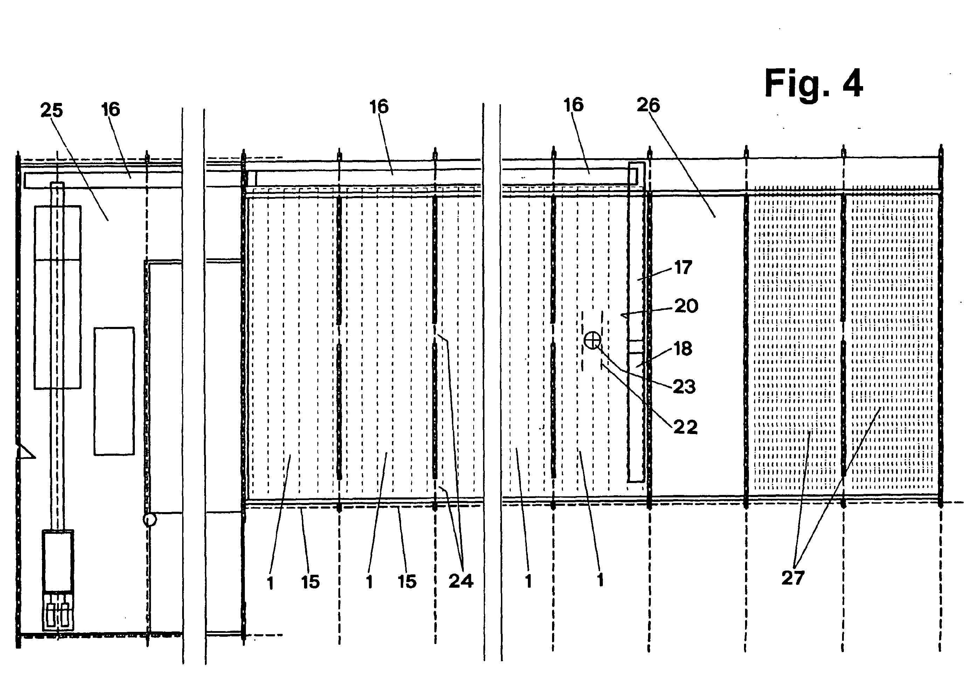

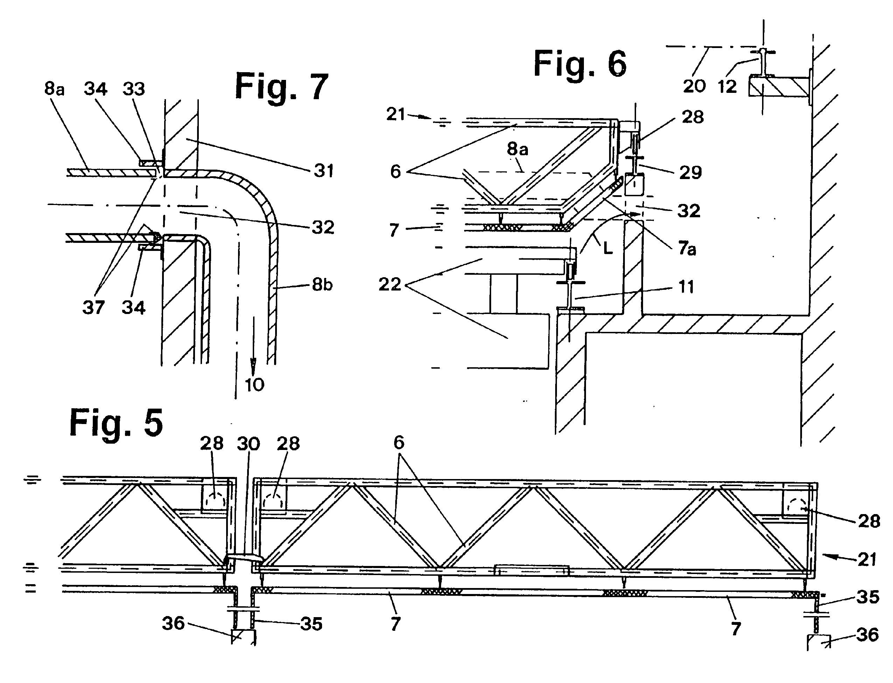

Ein Überblick der Kompostierungsanlage nach diesem zweiten Ausführungsbeispiel ergibt aus Fig. 4. Hier sind vier von einer grösseren Anzahl von in Reihe angeordneten Rottekammern 1 dargestellt. Das Rottegut wird, bevor es über die Befüllungseinrichtung 16 bzw. 17, 18 einer der Rottekammern 1 zugeführt wird, in einem Aufnahmebereich 25 vorbehandelt, insbesondere in einem Schredder zerkleinert und von unverrottbaren Fremdkörpern befreit. Am Ende der Reihe von Rottekammern 1 ist eine als Wartungsschacht und Ausweichraum dienende, leere Kammer 26 vorhanden. Zwei weitere Kammern 27 dienen hier als Abluftfilter und sind zu diesem Zweck mit einem entsprechenden Filtermaterial gefüllt Jede der einzelnen Rottekammern 1 ist mit einem eigenen Deckel 21 versehen. Wie im Detail aus den Fig. 5 und 6 ersichtlich, ist auch hier eine Tragkonstruktion in Form eines Streben-Gerüstes 6 vorgesehen. Die eigentliche Deckel-Fläche 7 ist in diesem Beispiel untergehängt. Sie ist vorzugsweise leicht und kann auch aus einer folienartigen Bespannung bestehen. Jeder Deckel 21 ist mittels Rädern bzw. Rollen 28 entlang eines Schienen-Paares verfahrbar, wovon hier eine Schiene 29 sichtbar ist. Am darunter liegenden Schienen-Paar 11 ist die Brücke 22 der Mischeinrichtung geführt. Diese ist dadurch unabhängig von der Position des Deckels 21 bewegbar. Am oberen Schienen-Paar 12 ist die Brücke 20 der Befüllungseinrichtung geführt.

Um die einzelnen Rottekammern 1 zu füllen, muss der entsprechende Deckel 21 weggefahren werden. Die Deckel 21 sind untereinander mittels Kopplungsmitteln 30 miteinander verbunden, hier in Form von Haken. Vorzugsweise sind die Deckel 21 motorisch verfahrbar, indem ein Rollenpaar 28 mit einem Antrieb verbunden ist. Da die Deckel 21 untereinander verbunden sind, ist es hierbei ausreichend, wenn ein einziger Deckel 21 der Deckelreihe angetrieben wird. Und zwar derjenige, am der als Wartungsschacht und Ausweichraum dienenden, leeren Kammer 26 angrenzenden Ende der Deckelreihe. Zum Öffnen einer bestimmten Rottekammer 1, werden die Kopplungsmittel 30 an der einen Seite ihres Deckels 21 ausgeklinkt. Dies erfolgt an der der leeren Kammer 26 abgewandten Seite des Deckels 21. Nun wird der Antrieb des ersten, an die leere Kammer 26 angrenzenden Deckels der Deckelreihe in Betrieb gesetzt und dieser Deckel über die leere Kammer 26 geschoben, die bei diesem Vorgang als Ausweichraum dient. Dabei bewegen sich alle miteinander gekoppelten Deckel 21 der Reihe, wie Waggons eines Zuges, ebenfalls vorwärts. Es bleiben nur diejenigen Deckel 21 stehen, die vor der zu öffnenden Röttekammer 1 liegen und ausgekoppelt wurden. Die gewünschte Rottekammer 1 ist nun offen. Zum Öffnen der ersten, beim Aufnahmebereich 25 liegenden Rottekammer 1, müssen sämtliche Deckel 21 weggefahren werden. Zum Öffnen der letzten, bei der leeren Ausweichraum-Kammer 26 liegenden Rottekammer 1, braucht nur deren Deckel 21 bewegt werden. Vor, während oder nach dem Öffnungsvorgang, kann die Brücke 20 der Befüllungseinrichtung 17, 18 an die betreffende Stelle gefahren werden und, sobald der Deckel 21 offen ist, die Rottekammer 1 füllen. Danach kann der Deckel 21, bzw. die Deckelreihe, wieder in die ursprüngliche Schliessposition gefahren werden.

Die vom Rottegut aufsteigenden und sich unter den Deckeln 21 sammelnden Gase, werden durch mindestens je einen, am Deckel 21 angesetzten Abluftkanal 8a abgeführt, der gemäss Fig. 7, seitlich bis dicht an die Abschluss-Wand 31 geführt ist. Jeweils entsprechend der Schliessposition der Deckel 21 sind in dieser Abschluss-Wand 31 dem Umfang der Abluftkanäle 8a entsprechende Öffnungen 32 vorgesehen. Von diesen Öffnungen 32 führt jeweils ein zweiter Abschnitt 8b der Abluftkanäle zum Sammelkanal 10, so dass in der Schliessposition der Deckel 21 die Gase über diesen Sammelkanal 10 der Filteranlage zugeführt werden. Beim Wegfahren der Deckel 21 wird das Ende des deckelseitigen Abluftkanales 8a jeweils ungehindert an der Abschluss-Wand 31 entlang bewegt. Um die sehr geringe Menge an Abluft, die durch den sich im Übergangsbereich 33 ergebenden Spalt noch zu verringern, kann oben, und allenfalls auch unten, ein sich über die Länge der Rottekammer-Reihe erstreckender Flansch 34 vorgesehen werden. In einer bevorzugten, besonders luftdichten Ausführung, ist eine den Übergangsbereich 33 dicht schliessende, am Ende des deckelseitigen Abluftkanales 8a angeordnete Dichtungslippe 37 vorgesehen, die vorzugsweise aus einem gurnmielastischen Material besteht. In diesem Fall kann auf den Flansch 34 auch verzichtet werden. Die Dichtungslippe 37 schleift beim Bewegen des Deckels 21über die glatte Wand. Sie unterliegt, aufgrund der geringen Anzahl von Deckelbewegungen, keinem nennenswerten Verschleiss.

Eine weitere Massnahme, um einerseits den Deckel dicht zu halten und auch während seines Bewegens für ein Abführen der Abluft zu sorgen, ist wiederum in Fig. 6 dargestellt. Das der Abschluss-Wand 31 zugewandte Ende 7a der Deckel-Fläche 7 ist nach oben gebogen oder ausgeformt, so dass, selbst wenn sich der in Bewegung befindliche Deckel 21 nicht in Andockposition seines Abluftkanales 8a zu einer der Öffnungen 32 befindet, die unter der Deckel-Fläche 7 befindliche Abluft gemäss Pfeil L durch eine oder mehrere der Öffnungen 32 zum Sammelkanal 10 gelangen kann. Es sei hier eingefügt, dass es denkbar ist, die Abluft grundsätzlich seitlich abzuführen und auf die deckelseitigen Abluftkanäle 8a zu verzichten. Durch eine Mehrzahl von Abluftkanälen 8a, die in entsprechende Öffnungen in der Deckel-Fläche 7 münden, kann indessen die Abluft rascher und wirksamer abgeführt werden.

Um zu verhindern, dass die Abluft beim Verschieben eines Deckels 21 durch den sich über der Trennwand 36 zwischen zwei Rottekammern ergebenden Spalt entweichen kann, sind gemäss Fig. 5 entlang dieser Kante der Deckel-Fläche 7 bis zur Trennwand 36 herunter hängende Lappen oder Schürzen 35 vorgesehen. Hierdurch ist sichergestellt, dass die an eine offene Rottekammer angrenzende, weitere Rottekammer luftdicht verschlossen bleibt und aus ihr keine Gase entweichen können.

Alle Abläufe, einschliesslich des Aus- und Einkoppeln der Deckel 21, können motorisch angetrieben und zentral gesteuert erfolgen. Der periodische Mischorgang kann unabhängig von der Deckelposition erfolgen, da die Brücke 22 der Misclieinrichtung 23 unter den Deckeln 21 geführt wird und in den Rottekammer-Wänden Durchlässe 24 vorgesehen sind. Zur Wartung können die Mischeinrichtung oder die Befüllungseinrichtung zur leeren Kammer 26 gefahren werden, die dann als Wartungsschacht dient. Das Entleeren der Rottekammern 1 erfolgt, wie schon beim ersten Ausführungsbeispiel, durch je eine seitliche, verschliessbare Öffnung 15.

Die Deckel bzw. Abdeckungsmittel können auch anders ausgebildet sein, als anhand der vorgehenden beiden Beispielen beschrieben. Sie können auch klappbar oder aufrollbar sein, z.B. in Form eines annähernd horizontal laufenden Rolltores. Theoretisch denkbar ist es auch, insbesondere bei einer grossen Anzahl von Rottekammern, einen einzigen Deckel zur Abdeckung von mehr als einer Rottekammer vorzusehen. Umgekehrt ist es auch möglich, den Deckel einer Rottekammer aufzuteilen, z.B. in zwei Hälften, die auseinander klappbar oder seitlich auseinander schiebbar sein können. Auch können andere Deckelführungen, als die in den Zeichnungen dargestellten Schienen vorgesehen sein. Denkbar ist auch das Verschieben der Deckel mittels hydraulischen oder pneumatischen Zylindern, zumal der Verschiebeweg der Deckel begrenzt ist, z.B. auf eine Rottekammer-Breite von 6 m. Die Rottekammern können auch als Doppel- oder Mehrfachreihe angeordnet sein; der Begriff Reihe schliesst hier diese Möglichkeit ausdrücklich ein.

Dank der durch Deckel 3 bzw. 21 einzeln verschliessbaren Rottekammern 1 werden die beim Verrottungsprozess entstehenden Gase jeweils direkt an der einzelnen Rottekammer 1 aufgefangen und abgeführt. Das Entweichen unangenehmer Gerüche in die Umgebung wird dadurch sehr wirksam an der Quelle verhindert. Hierbei ist auch besonders hervorzuheben, dass das Volumen der zu filternden Abluft drastisch vermindert wird, was die Betriebskosten deutlich senkt. Die sofort abgeleiteten, aggressiven Gase können auch nicht zu Schäden an der Hallenkonstruktion führen, so dass die Qualität deren Metallteile geringer und die Halle kostengünstiger hergestellt werden kann. Es ist sogar denkbar, auf die Seitenwände der Halle ganz zu verzichten, so dass nur eine Überdachung als Wetterschutz vorhanden ist. Rein aus Gründen der Abluft und der Geruchsimmissionen ist an sich weder eine Halle noch eine Überdachung notwendig. Die Gefahr von Schäden und Störungen an den mechanischen und elektrischen Einrichtungen wird deutlich vermindert, da z.B. die Befüllungseinrichtung kaum und die Mischeinrichtung in geringerem Umfang als bisher den Gasen ausgesetzt ist. Das Hallen- bzw. Arbeitsplatzklima ist für das Personal ganz erheblich angenehmer. Wartungs- und Reparaturarbeiten an den Einrichtungen können unbelastet und ungestört von gefährlichen und gesundheitsschädlichen Gasen durchgeführt werden.

## Patentansprüche

1. Kompostierungsanlage mit einer Mehrzahl von Rottekammern (1), die je nach oben offen sind oder mindestens eine teilweise nach oben gerichtete Öffnung aufweisen, durch die sie befüllbar sind, wobei Abdeckungsmittel (3, 21) zum Abdecken dieser Öffnung und mindestens eine Einrichtung (22, 23) zur Bearbeitung des Rottegutes vorhanden sind, **dadurch gekennzeichnet, dass** die Einrichtung (22, 23) zur Bearbeitung des Rottegutes unterhalb der Abdeckungsmittel (3, 21) angeordnet und unterhalb der Ebene dieser Abdeckungsmittel (3, 21) geführt (11) und verfahrbar ist, wodurch vom Rottegut aufsteigende Gase auch während dessen Bearbeitung unter den geschlossenen Abdeckungsmitteln (3, 21) gesammelt und abgeführt werden können.

2. Kompostierungsanlage nach Anspruch 1, **dadurch gekennzeichnet, dass** die Abdeckungsmittel aus mindestens je einem anhebbaren, aufklappbaren, aufrollbaren oder wegschiebbaren Deckel (3, 21) bestehen.

3. Kompostierungsanlage nach Anspruch 1 oder 2, **dadurch gekennzeichnet, dass** die Rottekammern (1) in mindestens einer Reihe angeordnet sind.

4. Kompostierungsanlage nach einem der Ansprüche 1 bis 3, **dadurch gekennzeichnet, dass** die Abdeckungsmittel bzw. Deckel (21) mittels Rädern oder Rollen (28) entlang von Schienen (29) verfahrbar sind.

5. Kompostierungsanlage nach Anspruch 4, **dadurch gekennzeichnet, dass** zumindest der vorderste Deckel (21) einer Deckelreihe motorisch angetrieben ist.

6. Kompostierungsanlage nach einem der Ansprüche 1 bis 5, **dadurch gekennzeichnet, dass** die Abdeckungsmittel oder Deckel (21) mittels mindestens eines hydraulischen oder pneumatischen Zylinders entlang von Führungen verschiebbar sind.

7. Kompostierungsanlage nach einem der Ansprüche 1 bis 6, **dadurch gekennzeichnet, dass** die einzelnen Abdeckungsmittel oder Deckel (21) mindestens einer Reihe von Rottekammern (1) Kopplungsmittel (30) aufweisen, um sie lösbar miteinander verbinden zu können, derart dass beim Verschieben oder Verfahren eines Deckels (21), die mit diesem verbundenen weiteren Deckel (21) mitgenommen werden.

8. Kompostierungsanlage nach einem der Ansprüche 1 bis 7, **dadurch gekennzeichnet, dass** in einer Reihe der Rottekmmern (1), eine leere Kammer (26) vorgesehen ist, die als Ausweichraum für verschiebbare bzw. verfahrbare Abdeckungsmitte oder Deckel (21) und/oder als Wartungsraum für Befüllungs- und/oder Mischeinrichtungen (16 - 20; 22, 23) zu dienen bestimmt ist.

9. Kompostierungsanlage nach einem der Ansprüche 1 bis 8, **dadurch gekennzeichnet, dass** die Mischeinrichtung (22, 23) aus mindestens einer Mischschnecke (23) besteht, die verfahrbar an einer entlang der Reihe von Rottekammern (1) ebenfalls verfahrbaren Brücke (22) angeordnet ist, so dass die Mischschnecke (23) in den Rottekammern (1) jeweils in einer X- und einer Y-Achse bewegbar ist.

10. Kompostierungsanlage nach Anspruch 9, **dadurch gekennzeichnet, dass** in den die einzelnen Rottekammern (1) voneinander trennenden Rottekammer-Wänden jeweils mindestens ein Durchlass (24) vorgesehen ist, durch welchen die Mischeinrichtung bzw. die Mischschnecke (23) von einer Rottekammer (1) zur nächsten bewegbar ist, wobei eine die Mischschnecke tragende Brücke (22) unter der Abdeckungsmittel-Ebene geführt ist.

11. Kompostierungsanlage nach einem der Ansprüche 1 bis 10, **dadurch gekennzeichnet, dass** die Abdeckungsmittel oder Deckel (3, 21) aus einer Tragkonstruktion bestehen, z.B. einem Streben-Gerüst (6), die eine Deckel-Fläche (7) trägt, welche entweder zwischen den Streben (6) der Tragkonstruktion oder über beziehungsweise unter dieser angeordnet ist.

12. Kompostlerungsanlage nach einem der Ansprüche 1 bis 11, **dadurch gekennzeichnet, dass** die Abdeckungsmittel oder Deckel (3, 21) mit mindestens einem Abluftkanal (8) verbunden sind, zur Ableitung der in der Rottekammer (1) entstehenden Gase an eine Filteranlage.

13. Kompostierungsanlage nach einem der Ansprüche 1 bis 12, **dadurch gekennzeichnet, dass** mindestens je ein an einem Abdeckungsmittel bzw. Deckel (21) angesetzter Abluftkanal (8a) bis an eine Abschluss-Wand (31) geführt ist, wobei jeweils entsprechend der Schliessposition des Deckels (21) in diese Abschluss-Wand (31) Öffnungen (32) vorgesehen sind, durch welche die Abluft einer Filteranlage zuleitbar ist, wobei der Übergangsbereich (33) zwischen diesen Abluftkanälen (8a) und der Abschluss-Wand (31) so gestaltet ist, dass das Bewegen des Deckels (21) nicht behindert ist aber das unerwünschte Entweichen von Abluft verhindert oder zumindest erschwert ist, indem eine Dichtungslippe (37) und/oder ein sich über die Länge der Rottekammer-Reihe erstreckender Flansch (34) vorhanden ist.

14. Kompostierungsanlage nach einem der Ansprüche 1 bis 13, **dadurch gekennzeichnet, dass** entlang der sich über einer Trennwand (36) zwischen zwei Rottekammern (1) liegender und parallel zur dieser verlaufenden Kante der Abdeckungsmittel oder der Deckel (21), von diesen bis zur Trennwand (36) herunter hängende Lappen oder Schürzen (35 vorgesehen sind, mit dem Zweck zu verhindern, dass beim Öffnen oder Verschieben eines Abdeckungsmittels bzw. Deckels (21) durch den sich über der Trennwand (36) zwischen zwei Rottekammern ergebenden Spalt die Abluft entweichen kann.

## Claims

1. Composting plant with a plurality of rotting chambers (1), which are upwardly open or have at least one partially upwardly facing opening through which they can be filled, wherein covering means (3, 21) for covering this opening and at least one device (22, 23) for working the rotting material are present, **characterised in that** the device (22, 23) for working the rotting material is arranged below the covering means (3, 21) and is guided (11) and can be moved below the plane of these covering means (3, 21), as a result of which gases rising from the rotting material can be collected and conducted away even while it is being worked under the closed covering means (3, 21).

2. Composting plant according to Claim 1, **characterised in that** the covering means consist of at least one lid (3, 21) which can be lifted up, swung up, rolled up or pushed away.

3. Composting plant according to Claim 1 or 2, **characterised in that** the rotting chambers (1) are arranged in at least one row.

4. Composting plant according to one of Claims 1 to 3, **characterised in that** the covering means or lids (21) can be moved along rails (29) by means of wheels or rollers (28).

5. Composting plant according to Claim 4, **characterised in that** at least the foremost lid (21) of a series of lids is motorised.

6. Composting plant according to one of Claims 1 to 5, **characterised in that** the covering means or lids (21) can be displaced along guides by means of at least one hydraulic or pneumatic cylinder.

7. Composting plant according to one of Claims 1 to 6, **characterised in that** the individual covering means or lids (21) of at least one row of rotting chambers (1) have coupling means (30) in order to be able to connect them to each other in a releasable manner in such a manner that when a lid (21) is displaced or moved, the other lids (21) which are connected to it are moved with it.

8. Composting plant according to one of Claims 1 to 7, **characterised in that** an empty chamber (26) is provided in a row of the rotting chambers (1), which empty chamber is intended to act as an alternative space for displaceable or movable covering means or lids (21) and/or as a maintenance space for filling and/or mixing devices (16 - 20; 22, 23).

9. Composting plant according to one of Claims 1 to 8, **characterised in that** the mixing device (22, 23) consists of at least one mixing screw (23) which is arranged in a movable manner on a bridge (22) which can likewise be moved along the row of rotting chambers (1), so that the mixing screw (23) can be moved in each case in an X-axis and a Y-axis in the rotting chambers (1).

10. Composting plant according to Claim 9, **characterised in that** in each case at least one passage (24) is provided in the rotting chamber walls which separate the individual rotting chambers (1) from each other, through which passage the mixing device or the mixing screw (23) can be moved from one rotting chamber (1) to the next, wherein a bridge (22) which bears the mixing screw is guided below the plane of the covering means.

11. Composting plant according to one of Claims 1 to 10, **characterised in that** the covering means or lids (3, 21) consist of a support structure, for example a strut frame (6) which bears a lid face (7) which is arranged either between the struts (6) of the support structure or above or below them.

12. Composting plant according to one of Claims 1 to 11, **characterised in that** the covering means or lids (3, 21) are connected to at least one exhaust air duct (8) for conducting the gases produced in the rotting chamber (1) to a filtering plant.

13. Composting plant according to one of Claims 1 to 12, **characterised in that** at least one exhaust air duct (8a) which is attached to a covering means or lid (21) is routed as far as an end wall (31), wherein openings (32) are provided in this end wall (31) in each case corresponding to the closing position of the lid (21), through which openings the exhaust air of a filtering plant can be fed, wherein the transition region (33) between these exhaust air ducts (8a) and the end wall (31) is configured in such a manner that the movement of the lid (21) is not hindered but the undesirable escape of exhaust air is prevented or at least made difficult by a sealing lip (37) and/or a flange (34) which extends over the length of the row of rotting chambers being present.

14. Composting plant according to one of Claims 1 to 13, **characterised in that** flaps or skirts (35) are provided along the edge, which lies over a partition (36) between two rotting chambers (1) and runs parallel to it, of the covering means or the lid (21), which flaps or skirts hang down from the latter to the partition (36) with the purpose of preventing the exhaust air from escaping through the gap produced above the partition (36) between two rotting chambers when a covering means or lid (21) is opened or displaced.

## Revendications

1. Installation de compostage avec une pluralité de chambres de décomposition (1), chacune ouverte vers le haut ou comportant au moins une ouverture orientée vers le haut, par laquelle elles peuvent être remplies, avec des moyens de couvercle (3, 21) pour recouvrir cette ouverture et au moins un dispositif (22, 23) pour le traitement des matières en décomposition, **caractérisée en ce que** le dispositif (22, 23) pour le traitement des matières en décomposition est disposé sous les moyens de couvercle (3, 21) et peut être guidé (11) et déplacé en-dessous du plan des moyens de couvercle (3, 21), les gaz émanant des matières en décomposition pouvant ainsi être collectés et évacués même pendant le traitement, sous les moyens de couvercle (3, 21) fermés.

2. Installation de compostage selon la revendication 1, **caractérisée en ce que** les moyens de couvercle sont constitués chacun d'au moins un couvercle (3, 21) susceptible d'être soulevé, rabattu, roulé ou coulissé.

3. Installation de compostage selon la revendication 1 ou 2, **caractérisée en ce que** les chambres de décomposition (1) sont disposées en au moins une rangée.

4. Installation de compostage selon l'une des revendications 1 à 3, **caractérisée en ce que** les moyens de couvercle ou le couvercle (21) peuvent être déplacés à l'aide de roues ou de roulettes (28) le long de rails (29).

5. Installation de compostage selon la revendication 4, **caractérisée en ce qu'**au moins le couvercle avant (21) d'une rangée de couvercles est entraîné de façon motorisée.

6. Installation de compostage selon l'une des revendications 1 à 5, **caractérisée en ce que** les moyens de couvercle ou le couvercle (21) peuvent être déplacés à l'aide d'au moins un cylindre hydraulique ou pneumatique le long de guidages.

7. Installation de compostage selon l'une des revendications 1 à 6, **caractérisée en ce que** les différents moyens de couvercle ou le couvercle (21) d'au moins une rangée de chambres de décomposition (1) comportent des moyens d'accouplement (30), permettant de les relier entre eux de façon détachable, de telle manière que lors du déplacement ou coulissement d'un couvercle (21), les autres couvercles (21) reliés à celui-ci sont également entraînés.

8. Installation de compostage selon l'une des revendications 1 à 7, **caractérisée en ce que** dans une rangée de chambres de décomposition (1), il est prévu une chambre vide (26) définie pour servir comme chambre de dégagement pour les moyens de couvercle déplaçables ou coulissants ou pour le couvercle (21), et/ou comme chambre de service pour des dispositifs de remplissage et/ou de mélange (16 - 20 ; 22, 23).

9. Installation de compostage selon l'une des revendications 1 à 8, **caractérisée en ce que** le dispositif de mélange (22, 23) est constitué d'au moins une vis de mélange (23) montée, de façon déplaçable le long d'une rangée de chambres de décomposition (1), sur un pont (22) également déplaçable, de sorte que la vis de mélange (23) peut être déplacée, respectivement selon un axe x et y, dans les chambres de décomposition (1).

10. Installation de compostage selon la revendication 9, **caractérisée en ce que** dans les cloisons de chambres de décomposition séparant les différentes chambres de décomposition (1) les unes par rapport aux autres, il est à chaque fois prévu un passage (24) par lequel le dispositif de mélange ou la vis de mélange (23) peut être déplacé d'une chambre de décomposition (1) vers la suivante, un pont (22) supportant la vis de mélange étant guidé sous la plan des moyens de couvercle.

11. Installation de compostage selon l'une des revendications 1 à 10, **caractérisée en ce que** les moyens de couvercle ou couvercles (3, 21) sont constitués d'une structure de support, par exemple un châssis d'entretoises (6), portant une surface de couvercle (7) disposée soit entre les entretoises (6) de la structure de support, soit au-dessus ou en-dessous de celle-ci.

12. Installation de compostage selon l'une des revendications 1 à 11, **caractérisée en ce que** les moyens de couvercle ou couvercles (3, 21) sont reliés à au moins un canal d'évacuation d'air (8), pour l'évacuation des gaz apparaissant dans la chambre de décomposition (1) vers une installation de filtrage.

13. Installation de compostage selon l'une des revendications 1 à 12, **caractérisée en ce qu'**au moins un canal d'évacuation (8a) appliqué sur un moyen de couvercle ou couvercle (21) est guidé jusqu'à une paroi terminale (31), des ouvertures (32) étant prévues dans cette paroi terminale (31) en fonction de la position de fermeture du couvercle (21), à travers lesquelles l'air à évacuer peut être guidé vers une installation de filtrage, la zone de transition (33) entre ces canaux d'évacuation (8a) et la paroi terminale (31) étant conçue non pas de manière à empêcher le mouvement du couvercle (21), mais de manière à empêcher ou du moins à entraver l'échappement indésirable de l'air à évacuer, grâce à une lèvre d'étanchéité (37) et/ou un rebord (34) s'étendant sur la longueur de la rangée de chambres de décomposition.

14. Installation de compostage selon l'une des revendications 1 à 13, **caractérisée en ce que** le long de l'arête des moyens de couvercle ou couvercles (21), située au-dessus d'une cloison (36) entre deux chambres de décomposition (1) et s'étendant parallèlement à celle-ci, il est prévu des chiffons ou tabliers (35) pendant vers le bas, dans le but d'empêcher l'air de s'échapper par l'espace apparaissant au-dessus de la cloison (36), entre deux chambres de décomposition, lors de l'ouverture ou du déplacement d'un moyen de couvercle ou couvercle (21).
